# EUROPEAN PATENT SPECIFICATION

(11) **EP 0 841 983 B1**
(45) Date of publication and mention of the grant of the patent: **08.12.1999**
(21) Application number: 96922986.3
(22) Date of filing: 04.07.1996
(51) Int. Cl.: B01J 19/00, B01J 19/24

(54) **CHEMICAL SYNTHESIS VESSEL AND SYSTEM EMPLOYING THE SAME**
GEFÄSS FÜR CHEMISCHE SYNTHESEN UND DIESES VERWENDENDE SYSTEM
CUVE DE SYNTHESE CHIMIQUE ET SYSTEME EMPLOYANT LADITE CUVE

(30) Priority: 02.08.1995 GB 9515831
(43) Date of publication of application: 20.05.1998
(73) Proprietor: Mettler-Toledo Myriad Ltd., Melbourn, Royston, Herts SG8 6DN (GB)
(72) Inventor: CASSELLS, John, Maclaren, Huntingdon, Cambridgeshire PE17 2BN (GB); GRAY, Richard, Henry, Cambridge CB2 5JZ (GB)
(74) Representative: Haley, Stephen
(86) International application number: GB9601630
(87) International publication number: WO9704863

(56) References cited:
- WO-A-85/01224
- DE-A- 3 412 886
- US-A- 4 567 021
- US-A- 4 837 159
- PATENT ABSTRACTS OF JAPAN vol. 9, no. 218 (C-301), 5 September 1985 & JP,A,60 082127 (OLYMPUS KOGAKU KOGYO K.K.), 10 May 1985, & DATABASE WPI Section Ch, Week 8525 Derwent Publications Ltd., London, GB; Class J02, AN 85-149741 & JP,A,60 082 127 (OLYMPUS OPTICAL K.K.) , 10 May 1985

## Description

This invention relates to a vessel in which the addition, mixing and agitation of fluids and solids, and the recovery of such fluids and solids or any products derived from them is performed, and a system employing at least one of such vessels. The invention may be used to generate solutions of many constituents under machine control. In particular, the invention may be used to carry out chemical reactions and to retrieve the products. The invention also relates to a system employing such vessels.

To perform a liquid/liquid- or liquid/solid-phase chemical reaction generally requires that the various reagents be added to a vessel in which the reaction will take place. It is often necessary that the reagents be thoroughly mixed in the vessel, and that the temperature of the vessel be controlled. It is also desirable to be able to recover easily both liquids and solids from the vessel.

Many systems have been proposed for carrying out several chemical syntheses in parallel, particularly for multiple peptide synthesis. Most common systems use a series of small cylindrical tube-like vessels attached at their base to a common manifold. Each tube may have a membrane or frit in the base to prevent solid phase material from washing out of the vessel into the manifold. Gas for agitation is supplied through the manifold and liquid in the vessel may be removed by disconnecting the gas supply and applying suction. It is common for many reaction vessels to be incorporated in a single block. For example, the Zinsser Analytical SMPS 350V Multiple Peptide Synthesizer has three vacuum blocks, each holding 48 disposable plastic reactors.

In solid phase synthesis (for example peptide synthesis) the product is built up on a solid phase support. The support, and thus the product, is retained in the reaction vessel by the frit. The solvent and excess liquid-phase reagents can be removed by suction from the bottom of the vessel, and the vessel rinsed through with fresh solvent. This process simplifies multi-stage synthesis because it is easy to separate the product from the reagents and solvent. However, this type of system has drawbacks when it comes to recovering the product at the end of the synthesis sequence.

It may be desired that the product be recovered free in solution by chemically cleaving it off the support. Alternatively, it may be required that the product be retained on the solid support for transfer to further synthesis stages, or for receptor binding studies.

Chemically cleaving the product from the support could be carried out in vessels of the type described above. However, if such systems are used for parallel synthesis, where a different product is synthesised in each of the many reaction vessels on the common manifold, recovery of the soluble products by suction through the manifold would result in mixing of all the different products, or risk the carry-over of one product into another. For this reason, it is desirable that the solid phase be retrieved from each individual reaction vessel or that the individual reaction vessels themselves can be removed from the manifold. Cleaving-off of the product can then be carried out independently. It is further desirable that retrieval of the solid phase or recovery of the product be carried out by an automated system without operator intervention.

Many systems have been developed to allow removal of individual reaction vessels, or to recover the solid phase automatically. Removable reaction vessel systems typically consist of cylindrical tube reaction vessels with a narrow neck at the base. The vessels are mounted vertically and the neck fits into a hole in a common manifold, where it forms a seal. The push-fit seal has to prevent solvent and gas from leaking out or air leaking in. This approach allows each vessel to be readily disconnected at the end of a synthesis. Removable vessels are typically inserted and removed by hand. As parallel synthesizers may have 96 or more reaction vessels, it would be advantageous to be able to insert or remove vessels by machine. This would require expensive robotics, and there could be the possibility of hazardous leaks. The present systems do not allow for reaction vessels to be disconnected from the aspiration manifold while still retaining all of the contents (including solvent) if desired.

Recovery of solid phase from such vessels is also typically performed by hand. Automated systems have been demonstrated where excess solvent is used to fluidise the solid phase sufficient for it to be aspirated off but, solid phase recovery by this process is slow, and it is difficult to recover all of the solid phase.

A further problem is that the relative reaction rates for different chemical reactions can cause problems in large single-manifold parallel synthesizers. Many of the functions, such as solvent removal or gas agitation, have to be carried out in parallel. This means that the time allowed for each cycle is typically the time taken for the slowest reaction. For example, a reaction in one tube may take only five minutes to go to completion, but the next stage cannot be started until the slower reaction in another tube is completed some two hours later. During this time the product in the first tube may be deteriorating through side reactions. It is common for a compromise to be imposed that results in insufficient time for one reaction and too much time for another.

Furthermore, parallel synthesizers are relatively expensive systems because the reaction vessels are immobile, and so most of the functions such as solvent and reagent addition have to be performed using overhead robotic arms that move in the X, Y and Z directions, and thus address each vessel in a manifold.

US-A-4567021 discloses a vessel which can be arranged to provide a U-shaped passageway connecting two chambers. US-A-4837159 discloses a chemical analysis system employing vessels with U-shaped passageways.

According to the present invention, there is provided a reaction vessel formed from a chemically inert material, the vessel comprising:
a first chamber having a first opening through which substances can be inserted into or removed from the chamber during use of the vessel in a process, and a second opening;
a second chamber having a first opening through which substances can be inserted into or removed from said second chamber; and characterised by a rigid substantially U-shaped passageway connecting the second opening of the first chamber with the second chamber, the cross-sectional area of the passageway being smaller than the cross-sectional areas of both the first and second chambers.

The first openings of the two chambers may be arranged so that they have directions of entry that are parallel to one another. The passageway may be of dimensions which create plug flow of liquids passing therethrough. The second opening of the first chamber may be arranged to retain a frit, which may be removable. The vessel may be fabricated with a support attached to it such that the vessel can be maintained in an upright, free-standing position. The second chamber may be considered as a manifold with a single opening at the top. Liquid deposited in the vessel will be retained without the need for any seals or a balancing gas pressure.

A system employing at least one vessel according to the present invention is also provided.

Means may be provided for making a temporary connection from one or both chambers of the vessel to a fluid or gas delivery and/or recovery system. Powders may be deposited into the reaction vessel through the first openings. The solid, liquid and gas supply systems may be brought to the vessel independently . Alternatively, the vessel itself may be taken to the supplies. In this way, a multitude of liquid or gas supplies may in turn access a single vessel without risk of cross contamination. Conversely, a single gas or liquid supply system may serve many vessels in turn.

A lid, which may be removable or hinged, may be provided for the reaction vessel to reduce solvent loss through evaporation. This lid may have a small opening to allow solvent addition and gas escape. A condenser may be fitted to the reaction vessel to reduce solvent loss and to allow reflux. An air condenser would be particularly appropriate because it does not require fluid delivery connections. The vessels themselves may also be temporarily connected to a condenser with a receiver to collect distillate, thereby allowing solvent removal and recovery through distillation.

Means may also be provided for inverting the vessel such that the contents can be collected by tipping out. The reaction vessel may be a tube-like vessel of any cross-sectional shape. For example it may be cylindrical, or elliptical or be provided with a lip for ease of decanting. Means for rinsing the vessel with solvent while in the inverted position may be provided in the system.

There may further be provided a means of controlling the temperature in the vessel, for example through a plate on which the vessel stands, through a convection system, or through an electrical heater and cooler built in to the vessel. Mechanical agitation may be provided for example by shaking or vibrating a base on which the vessel stands, by spinning the vessel, magnetic stirring, or by incorporation of a piezo-ceramic device built into the vessel.

A completely self-contained and movable reaction vessel allows the vessel to be taken to an actuator for each function, preferably by using a simple carousel device. With such an arrangement, the actuators for solvent delivery, agitation etc. would only have to operate in one direction (for example the Z-direction only). This approach requires cheaper hardware because a robotic arm is not required. It can also provide shorter access times in many applications.

The present invention provides a vessel for use in a system for automated chemical synthesis that enables at least some of the following benefits to be provided:
addition and recovery of solid and liquid reagents;
agitation by gas or liquid fluidisation, or by mechanical means; independent temperature control of each reaction vessel; independent timing for each vessel; efficient recovery of solid and/or liquid products from each vessel independently of all others retention of liquid in the reaction vessel for extended periods without the need for a seal fully self-contained reaction vessel and manifold; fully automated control and operation; condensing of vapour to reduce solvent loss and allow reflux.

Such a system is of considerable benefit in the synthesis of chemical libraries for drug discovery where thousands of individual syntheses must be carried out.

An example of the present invention will now be described with reference to the accompanying drawings, in which:
Figure 1 is a schematic diagram of a system not in accordance with the invention; and
Figures 2A and 2B show examples of reaction vessels that may be employed in the example of figure 1.

The following example describes a vessel being used to perform a single-stage solid-phase synthesis, and demonstrates how some of the benefits listed previously can be provided. The invention is not limited to use in solid phase synthesis however, and can be used to perform multiple steps.

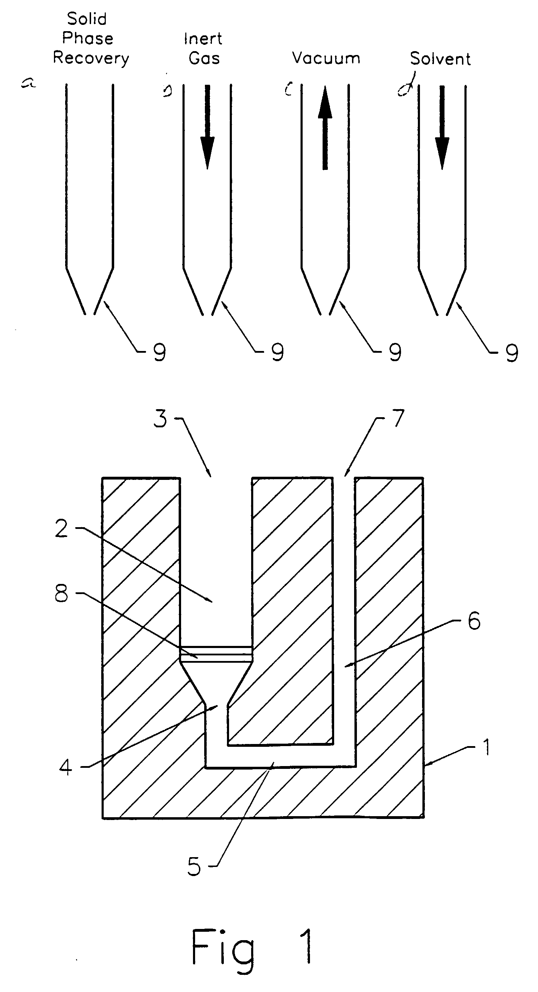

Referring to Figure 1 a reaction vessel 1 is formed from a block of chemically inert material. The reaction vessel 1 has a first chamber 2 having a first opening 3 and a second opening 4 which is connected to a passageway 5. The passageway 5 is, in turn, connected to a second chamber 6 which has a first opening 7. A frit 8 is removably positioned within the first chamber 2.

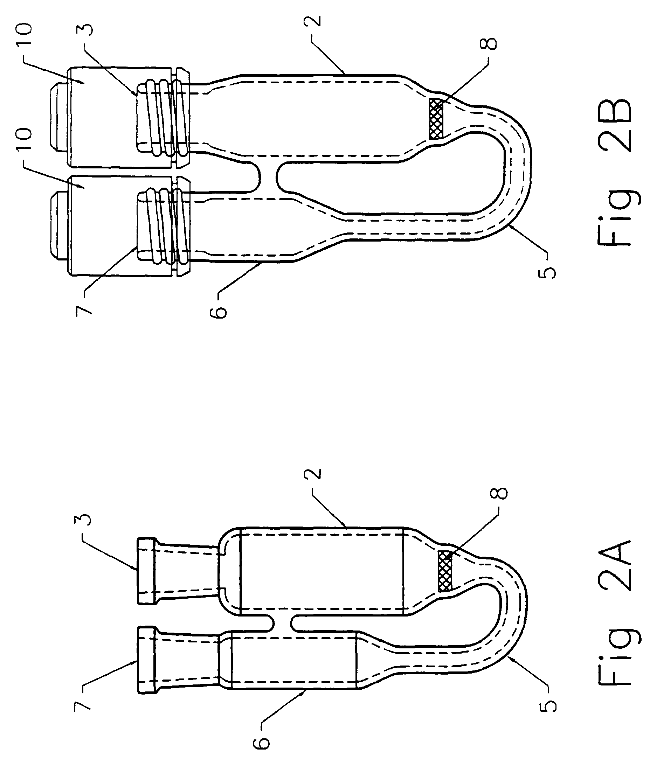

Referring to figures 2A and 2B, two examples of glass reaction vessels 1 according to the invention are shown. In these figures, components corresponding to those of figure 1 are identically numbered. In the two examples of figures 2A and 2B, the second chamber 6 is widened to reduce the possibility of overflow of substances via the first opening 7 of the second chamber 6. Both the examples of these figures are formed from glass moulds, and each shows a different form of possible standard connection for their respective first openings 3, 7. The example of figure 2B shows lids 10 covering openings 3 and 7. Agitation, liquid and solid handling can be performed with a system employing the invention. In the example of figure 1, actuators 9 are provided that dock with and seal onto the first openings 3, 7 of either or both chambers 2, 6 of the vessel 1. These actuators 4 may be made specific to either or both openings as appropriate. In addition, the lids 10 may be provided with means (such as a septum) for allowing access to the chambers 2,6 without removing the lids 10.

The solid phase, reagents and solvent are deposited in the first chamber 2 of the vessel 1. A solvent actuator 1 can deliver solvent into the reaction vessel 1 directly, or fluidise the contents of the reaction vessel 1 through supply via the second chamber 6.

Agitation is provided by making a connection between the second chamber 6 and a pressurised inert gas supply. The connection for the gas supply can be a simple pipe with a shaped end that seals when pressed against the end of the first opening of the second chamber. This tube 9 need only be connected when agitation is required, and this could be intermittent. This provides the benefit of efficient mixing while reducing solvent loss because the vessel format does not require the gas supply to be continuous. As the format provides an independent "pot", alternative or additional agitation could be provided by mechanical means such as vibration through the base or rotation.

Reactions are carried out by incubating the contents with constant or occasional agitation for the desired period of time.

During the reaction the temperature of the vessel 1 may be controlled by a heating/cooling system. The independence provided by the reaction vessel 1 format allows each reaction vessel in a system to be incubated on a separate hot-plate or cooler allowing independent temperature control of each vessel 1. The incubation time for each vessel 1 may also be set independently of all others to suit differing reaction rates.

When the reaction is complete, the solvent and excess reagent are removed by making a connection between the second chamber 6 and a vacuum system 9. This aspirates off the solvent, leaving the solid phase in the first chamber 2 retained by the frit 8. Efficient rinsing of the solid phase is performed by either depositing solvent directly into the reaction vessel 1 while drawing off through the vacuum connection, or by fluidising the contents of the reaction vessel through pumping in solvent via the second chamber 6 and then aspirating off again with a vacuum.

Recovery of the product may be performed by adding a decoupling reagent and incubating the reaction with agitation before aspirating off the product via the second chamber 6. As each vessel 1 in a system has its own second chamber 6, the products may be recovered independently. Alternatively, if recovery of the solid phase with the product attached is required the entire vessel 1 may be lifted and inverted and the solid phase rinsed into an open vessel. The solid phase from each vessel 1 can therefore be decanted easily with maximum recovery. The format allows each solid phase to be recovered independently into specific receptacles.

Both solid and liquid phase constituents can be stored in the vessel 1 indefinitely by lifting it out of the automated system.

A working model of the invention was made by drilling two holes 3 mm in diameter and 16 mm between centres through a 40 mm diameter solid perspex cylinder 55 mm long. One of the holes was then drilled out from one end of the perspex cylinder to 18 mm in diameter and 47 mm deep to form a reaction.vessel. At the same end of the perspex cylinder the end of the other tube was drilled out to 4 mm diameter for 15 mm of its length to form a receptacle into which a luer-type syringe end can be press fitted. This formed the top face of the device.

At the other end, the parallel drillings were joined up by milling a 3 mm x 3 mm slot between them. A perspex disc of 40 mm diameter and 4 mm thick was solvent welded over the milled slot and the drillings formed a U-tube.

The various functions of the device were demonstrated using water to model the addition/removal of solvent/reagents; peptide synthesis beads as a solid phase; compressed air for agitation and a vacuum line for solvent removal. Perspex was used to enable the function of the device to be observed easily. As this plastic is not resistant to many solvents, other practical vessels may use other plastics (such as PTFE, Kel-f, polypropylene, polyethylene etc.), metal, glass, ceramics or other suitable materials in their construction.

The method of construction is not limited to the example shown. The U-shaped passageway may also be formed by casting, injection moulding, vacuum forming, glass blowing, pipe bending or any other suitable techniques.

The invention is not limited to a single reaction vessel system. Multiple vessels (not shown) can be provided in a parallel synthesizer, with solid, liquid and gas addition and recovery being provided by a common system. The invention allows all reaction vessels in a parallel synthesise to be addressed independently of each other if required, and to be removed and transferred to storage or other synthesizers without affecting the remaining vessels in the system.

The invention is also not limited to a single first chamber 2 acting as a reaction well. Where desired, a plurality of vessels can be provided in a single block. Multi-branch vessels may also be provided where two or more first chambers 2 are connected to a second chamber 6, or where one vessel 1 has several second chambers 6 (allowing, for example, simultaneous fluidisation and aspiration).

## Claims

1. A reaction vessel (1) formed from a chemically inert material, the vessel comprising:
a first chamber (2) having a first opening (3) through which substances can be inserted into or removed from the chamber during use of the vessel in a process, and a second opening (4);
a second chamber (6) having a first opening (7) through which substances can be inserted into or removed from said second chamber; and characterised by
a rigid substantially U-shaped passageway (5) connecting the second opening of the first chamber with the second chamber, the cross-sectional area of the passageway being smaller than the cross-sectional areas of both the first and second chambers.

2. A vessel (1) according to claim 1, wherein the passageway (5) is of dimensions which create plug flow of liquids passing therethrough.

3. A vessel (1) according to claim 1 or claim 2, wherein the second opening (4) of the first chamber (2) is arranged to retain a frit (8).

4. A vessel (1) according to claim 3, in which the frit is removable (8).

5. A vessel (1) according to any of the preceding claims, in which substances can be removed from the first opening (7) of the second chamber (6) during use of the vessel (1) in a process.

6. A vessel (1) according to any of the preceding claims, in which the directions of entry of the two first openings (3,7) are parallel to one another.

7. A vessel (1) according to any of the preceding claims, in which the vessel is fabricated with a support attached to it such that it can be maintained in an upright, free-standing position.

8. A vessel (1) according to any of the preceding claims and further including a lid for the first opening (3) of the first chamber (2).

9. A vessel (1) according to claim 8, in which the lid has an opening to allow solvent and reagent addition and gas escape.

10. A vessel (1) according to any of the preceding claims, in which the first chamber (2) is a tube-like vessel of cylindrical cross-sectional shape.

11. A vessel (1) according to any of the preceding claims, in which the first chamber (2) is provided with a lip for ease of decanting.

12. A chemical synthesising system employing at least one vessel (1) according to any of the preceding claims.

13. A system according to claim 12, further comprising means for making a connection from one or both chambers (2,6) of the vessel (1) to a fluid or gas delivery and/or recovery system.

14. A system according to claim 12 or claim 13, further comprising means to move the vessel (1) to a substance delivery or recovery device.

15. A system according to claim 12, 13 or 14, in which a condenser is connected to the at least one vessel (1).

16. A system according to claim 16, in which the condenser is fitted with a receiver to collect distillate, thereby allowing solvent removal and recovery through distillation.

17. A system according to any of claims 12 to 16, in which means is provided for inverting the vessel (1) to collect its contents.

18. A system according to claim 17, in which means for rinsing the vessel (1) with solvent while in the inverted position is provided.

19. A system according to any of claims 12 to 18, in which there is provided means for controlling the temperature of the vessel (1).

20. A system according to any of claims 12 to 19, in which means for providing mechanical agitation to the vessel (1) is provided.

21. A system according to claim 20, in which agitation is provided by a piezo-ceramic device built into the at least one vessel (1).

## Patentansprüche

1. Reaktionsbehälter (1), der aus einem chemisch inerten Material besteht, wobei der Behälter folgendes aufweist:
- eine erste Kammer (2), die eine erste Öffnung (3), durch die im Gebrauch des Behälters in einem Prozeß Substanzen in die Kammer eingeführt oder aus dieser entnommen werden können, und eine zweite Öffnung (4) besitzt;
- eine zweite Kammer (6), die eine erste Öffnung (7) hat, durch die Substanzen in die zweite Kammer eingeführt oder aus dieser entnommen werden können; und
gekennzeichnet durch
einen steifen, im wesentlichen U-förmigen Kanal (5), der die zweite Öffnung der ersten Kammer mit der zweiten Kammer verbindet, wobei die Querschnittsfläche des Kanals kleiner als die Querschnittsflächen sowohl der ersten als auch der zweiten Kammer ist.

2. Behälter (1) nach Anspruch 1,
wobei der Kanal (5) Dimensionen hat, die eine PfropfenStrömung von durch ihn hindurchströmenden Flüssigkeiten erzeugen.

3. Behälter (1) nach Anspruch 1 oder 2,
wobei die zweite Öffnung (4) der ersten Kammer (2) so angeordnet ist, daß sie eine Fritte (8) hält.

4. Behälter (1) nach Anspruch 3,
wobei die Fritte (8) entfernbar ist.

5. Behälter (1) nach einem der vorhergehenden Ansprüche, wobei im Gebrauch des Behälters (1) in einem Prozeß Substanzen aus der ersten Öffnung (7) der zweiten Kammer (6) entnommen werden können.

6. Behälter (1) nach einem der vorhergehenden Ansprüche, wobei die Eintrittsrichtungen der zwei ersten Öffnungen (3, 7) parallel zueinander sind.

7. Behälter (1) nach einem der vorhergehenden Ansprüche, wobei der Behälter mit einer daran angebrachten Abstützung hergestellt ist, so daß er in einer aufrechten, frei stehenden Position gehalten werden kann.

8. Behälter (1) nach einem der vorhergehenden Ansprüche, der ferner einen Deckel für die erste Öffnung (3) der ersten Kammer (2) aufweist.

9. Behälter (1) nach Anspruch 8,
wobei der Deckel eine Öffnung hat, so daß die Zugabe von Lösungsmittel und Reagens und das Entweichen von Gas ermöglicht werden.

10. Behälter (1) nach einem der vorhergehenden Ansprüche, wobei die erste Kammer (2) ein rohrartiges Gefäß mit zylindrischer Querschnittsgestalt ist.

11. Behälter (1) nach einem der vorhergehenden Ansprüche, wobei die erste Kammer (2) mit einer Lippe versehen ist, um das Dekantieren zu erleichtern.

12. Chemisches Synthetisiersystem,
das wenigstens einen Behälter (1) nach einem der vorhergehenden Ansprüche verwendet.

13. System nach Anspruch 12,
das ferner Einrichtungen zum Herstellen einer Verbindung von einer oder beiden Kammern (2, 6) des Behälters (1) zu einem Fluid- oder Gasabgabe- und/oder -rückgewinnungssystem aufweist.

14. System nach Anspruch 12 oder 13,
das ferner Einrichtungen aufweist, um den Behälter (1) zu einer Substanzabgabe- oder -rückgewinnungseinrichtung zu bewegen.

15. System nach Anspruch 12, 13 oder 14,
wobei ein Kondensator mit dem mindestens einen Behälter (1) verbunden ist.

16. System nach Anspruch 16,
wobei an dem Kondensator ein Sammelbehälter zum Sammeln von Destillat angebracht ist, so daß die Entnahme und Rückgewinnung von Lösungsmittel durch Destillation ermöglicht werden.

17. System nach einem der Ansprüche 12 bis 16,
wobei Einrichtungen zum Umkehren des Behälters (1) vorgesehen sind, um seinen Inhalt zu sammeln.

18. System nach Anspruch 17,
wobei Einrichtungen zum Spülen des Behälters (1) mit Lösungsmittel, während er sich in der umgekehrten Position befindet, vorgesehen sind.

19. System nach einem der Ansprüche 12 bis 18,
wobei Einrichtungen zur Steuerung der Temperatur des Behälters (1) vorgesehen sind.

20. System nach einem der Ansprüche 12 bis 19,
wobei Einrichtungen vorgesehen sind, um Behälter (1) mit einer mechanischen Bewegung zu beaufschlagen.

21. System nach Anspruch 20,
wobei die Bewegung durch eine piezokeramische Einrichtung erzeugt wird, die in den mindestens einen Behälter (1) eingebaut ist.

## Revendications

1. Récipient (1) pour réaction, en matière chimiquement inerte, comprenant une première chambre (2) présentant une première ouverture (3) par laquelle des substances peuvent être introduites dans la chambre ou ôtées de la chambre lors de l'utilisation du récipient dans un procédé, et une seconde ouverture (4), et une seconde chambre (6) présentant une première ouverture (7) par laquelle des substances peuvent être introduites dans ladite seconde chambre ou ôtées de ladite seconde chambre, et **caractérisé** par un conduit (5) rigide, pratiquement en forme de U, reliant la seconde ouverture de la première chambre à la seconde chambre, l'aire de section droite du conduit étant inférieure aux aires de section droite de la première chambre et de la seconde chambre.

2. Récipient (1) selon la revendication 1, dans lequel le conduit (5) a des dimensions qui provoquent un écoulement à bouchons des liquides qui le traversent.

3. Récipient (1) selon la revendication 1 ou 2, dans lequel la seconde ouverture (4) de la première chambre (2) est conçue de manière à retenir un fritté (8).

4. Récipient (1) selon la revendication 3, dans lequel le fritté (8) est amovible.

5. Récipient (1) selon l'une quelconque des revendications précédentes, dont on peut ôter des substances par la première ouverture (7) de la seconde chambre (6) lors de l'utilisation du récipient (1) dans un procédé.

6. Récipient (1) selon l'une quelconque des revendications précédentes, pour lequel les directions d'entrée des deux premières ouvertures (3, 7) sont parallèles.

7. Récipient (1) selon l'une quelconque des revendications précédentes, qui est fabriqué avec un support lié à lui, de telle sorte qu'il peut être maintenu en position verticale, stable par elle-même.

8. Récipient (1) selon l'une quelconque des revendications précédentes, qui comprend en outre un couvercle pour la première ouverture (3) de la première chambre (2).

9. Récipient (1) selon la revendication 8, pour lequel le couvercle présente une ouverture permettant l'addition de solvant et de réactif et permettant au gaz de s'échapper.

10. Récipient (1) selon l'une quelconque des revendications précédentes, dans lequel la première chambre (2) a la forme d'un tube de section droite cylindrique.

11. Récipient (1) selon l'une quelconque des revendications précédentes, pour lequel la première chambre (2) est munie d'un rebord pour faciliter la décantation.

12. Système pour la synthèse chimique, qui utilise au moins un récipient (1) selon l'une quelconque des revendications précédentes.

13. Système selon la revendication 12, qui comprend en outre des moyens pour relier l'une des chambres (2, 6) du récipient (1) ou les deux chambres à un système d'apport et/ou de récupération de liquide ou de gaz.

14. Système selon la revendication 12 ou 13, qui comprend en outre des moyens pour amener le récipient (1) à un dispositif d'apport ou de récupération de substance.

15. Système selon l'une quelconque des revendications 12 à 14, dans lequel un réfrigérant est relié à au moins un récipient (1).

16. Système selon la revendication 15, dans lequel le réfrigérant est équipé d'un dispositif récepteur pour le recueil du distillat, ce qui permet d'éliminer le solvant par distillation et de le récupérer.

17. Système selon l'une quelconque des revendications 12 à 16, qui est muni de moyens permettant de renverser le récipient (1) pour recueillir son contenu.

18. Système selon la revendication 17, qui est muni de moyens pour rincer le récipient (1) avec un solvant pendant qu'il est en position renversée.

19. Système selon l'une quelconque des revendications 12 à 18, qui est muni de moyens pour régler la température du récipient (1).

20. Système selon l'une quelconque des revendications 12 à 19, qui est muni de moyens pour fournir une agitation mécanique au récipient (1).

21. Système selon la revendication 20, dans lequel l'agitation est fournie par un dispositif piézo-céramique, incorporé dans le au moins un récipient (1).
